# EUROPEAN PATENT APPLICATION

(11) **EP 4 815 055 A1**
(43) Date of publication of application: **30.09.2026**
(21) Application number: 26164264.9
(22) Date of filing: 12.03.2026
(51) Int. Cl.: H01M 4/36, C01G 45/02, C01G 51/04, C01G 53/04, H01M 4/505, H01M 4/525

(54) **MANUFACTURING METHOD OF CATHODE ELECTRODE COMPOSITE MATERIAL OF LITHIUM ION BATTERY**

(30) Priority: 14.03.2025 TW 114109494
(71) Applicant: Hon Hai Precision Industry Co., Ltd., 236038 New Taipei City (TW); SolidEdge Solution Inc., 300094 Hsinchu City (TW)
(72) Inventor: HUNG, Chen-Tsung, 300094 Hsinchu City (TW); CHANG, Tseng-Lung, 300094 Hsinchu City (TW)
(74) Representative: Winter, Brandl - Partnerschaft mbB

(57) **Abstract**

The present disclosure provides a manufacturing method of a cathode electrode composite material of a lithium ion battery. A first dry-mixing process is performed to mix a cathode electrode active substance with a lithium ion conductor. A second dry-mixing process is performed to attach the lithium ion conductor to the cathode electrode active substance. A heat treatment process is performed to form an interface phase by the cathode electrode active substance and the lithium ion conductor between, where the interface phase is different from a crystalline phase of the cathode electrode active substance and a crystalline phase of the lithium ion conductor.

## Description

### BACKGROUND

### Field of Invention

The present disclosure relates to the lithium ion battery. More particularly, the present disclosure relates to the manufacturing method of the cathode electrode composite material of the lithium ion battery.

### Description of Related Art

A transition metal oxide generally has high energy density or high operation voltage, which makes it an advantageous selection for the cathode electrode material system of the lithium ion battery. However, the capacity per gram of the transition metal oxide may lose so fast during the charge and discharge cycles, leading to the short lifetime of the lithium ion battery. Additionally, the energy barrier may be too high for the lithium ions to move in and out the electrode when a transition metal oxide is used as the main material of the electrode, which affects the high-rate charge and discharge performance of the lithium ion battery.

### SUMMARY

Embodiments of the present disclosure provide a manufacturing method of a cathode electrode composite material of a lithium ion battery. The resulted lithium ion battery has high charge and discharge performance and retains its capacity per gram after a number of charge and discharge cycles.

According to some embodiments of the present disclosure, a manufacturing method of a cathode electrode composite material of a lithium ion battery includes the following steps. A first dry-mixing process is performed to mix a cathode electrode active substance with a lithium ion conductor. A second dry-mixing process is performed to attach the lithium ion conductor to the cathode electrode active substance. A heat treatment process is performed to form an interface phase by the cathode electrode active substance and the lithium ion conductor, where the interface phase is different from a crystalline phase of the cathode electrode active substance and a crystalline phase of the lithium ion conductor.

According to some other embodiments of the present disclosure, a manufacturing method of a cathode electrode composite material of a lithium ion battery includes the following steps. A first dry-mixing process is performed to form a mixture with a cathode electrode active substance and a lithium ion conductor, where the lithium ion conductor is dispersed in the cathode electrode active substance. A second dry-mixing process is performed on the mixture to form composite particles by attaching the lithium ion conductor to the cathode electrode active substance, where a second rotational speed of the second dry-mixing process is faster than a first rotational speed of the first dry-mixing process. A heat treatment process is performed on the composite particles to form the cathode electrode composite material, where the cathode electrode composite material includes an interface phase formed by the cathode electrode active substance and the lithium ion conductor.

According to the above-mentioned, the manufacturing method of the cathode electrode composite material of the present disclosure includes the first dry-mixing process, the second dry-mixing process, and the heat treatment process. The different rotational speeds of the two dry-mixing processes may facilitate the dispersion and the attachment to the cathode electrode active substance of the lithium ion conductor. The heat treatment process forms an interface phase by the cathode electrode active substance and the lithium ion conductor. As a result, the cathode electrode composite material is formed with high bonding strength and low diffusional impedance, which improves the charge and discharge cycle performance of the lithium ion battery.

### BRIEF DESCRIPTION OF THE DRAWINGS

Fig. 1 illustrates a flowchart of a manufacturing method of a cathode electrode composite material, according to some embodiments of the present disclosure.
Fig. 2 illustrates a schematic view of reactions for manufacturing the cathode electrode composite material, according to some embodiments of the present disclosure.
Fig. 3 illustrates a partial cross-sectional view of a second reaction chamber, according to some embodiments of the present disclosure.
Fig. 4 is an X-ray diffraction spectrum of a cathode electrode composite material, according to some embodiments of the present disclosure.
Fig. 5 is a scanning electron microscope image of a cathode electrode composite material, according to some embodiments of the present disclosure.
Fig. 6 is a charge and discharge graph of lithium ion batteries, according to some embodiments of the present disclosure.
Fig. 7 is a graph of capacity per gram against number of charge and discharge cycles of lithium ion batteries, according to some embodiments of the present disclosure.
Fig. 8 is a graph of retained percentage of capacity per gram against number of charge and discharge cycles of lithium ion batteries, according to some embodiments of the present disclosure.

### DETAILED DESCRIPTION

Some embodiments of the present disclosure provide a manufacturing method of a cathode electrode composite material of a lithium ion battery, where the method includes a first dry-mixing process, a second dry-mixing process, and a heat treatment process. The first rotational speed of the first dry-mixing process is different from the second rotational speed of the second dry-mixing process, so the lithium ion conductor may be dispersed and attached to the cathode electrode active substance. The heat treatment process may results in an interface phase formed by the cathode electrode active substance and the lithium ion conductor, which reduces the risk of the lithium ion conductor falling off from the cathode electrode active substance and reduces the diffusional impedance of lithium ions. Therefore, the cathode electrode composite material manufactured by the method of the present disclosure may improve the charge and discharge cycle performance of the lithium ion battery.

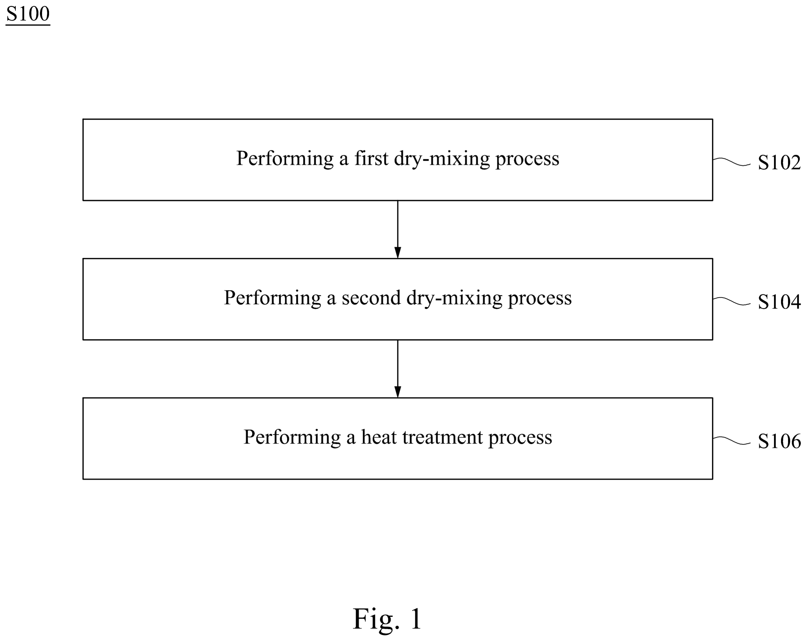

According to some embodiments of the present disclosure, Fig. 1 illustrates a flowchart of a method S100 for manufacturing a cathode electrode composite material. The method S100 includes performing a first dry-mixing process to mix a cathode electrode active substance and a lithium ion conductor; performing a second dry-mixing process on the mixture of the cathode electrode active substance and the lithium ion conductor to form composite particles; and performing a heat treatment process on the composite particles to form the cathode electrode composite material. These steps of the method will be discussed in details referring to Fig. 1 along with the rest figures.

First, the method S100 starts from step S102, which a first dry-mixing process is performed to mix a cathode electrode active substance with a lithium ion conductor. Specifically, the cathode electrode active substance is used as the main body of the cathode electrode composite material, and the lithium ion conductor acts as the surface modification of the cathode electrode active substance to increase the lithium ionic conductivity of the cathode electrode composite material. During the first dry-mixing process, the cathode electrode active substance and the lithium ion conductor are added into a first reaction chamber. The cathode electrode active substance and the lithium ion conductor are mixed by rotating or rolling the first reaction chamber to dispense the lithium ion conductor in the cathode electrode active substance. The cathode electrode active substance and the lithium ion conductor are directly mixed in a dry powder state in the first dry-mixing process, where an additional solvent or a liquid dispenser may not be added during the first dry-mixing process.

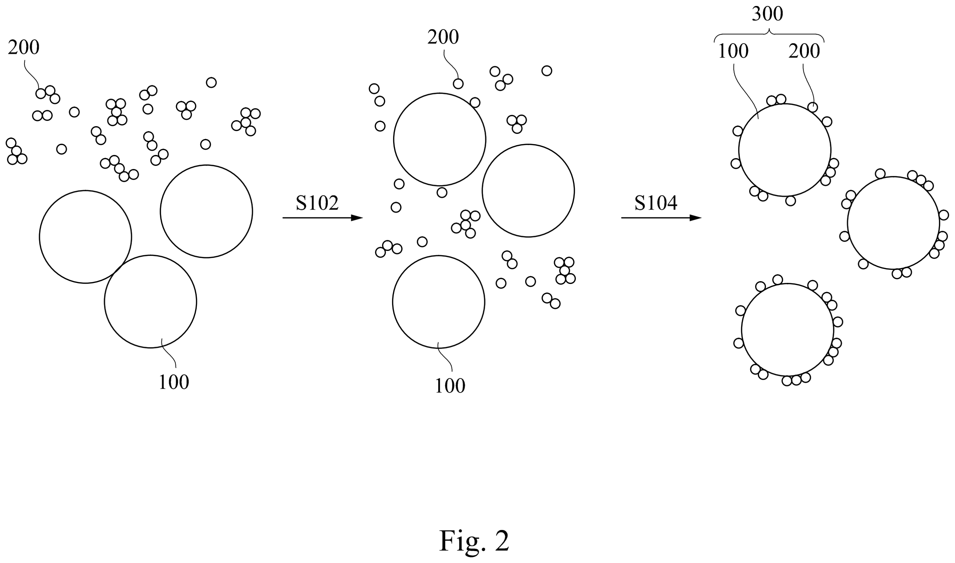

Referring to the schematic view of reactions for manufacturing the cathode electrode composite material in Fig. 2, the cathode electrode active substance 100 and the lithium ion conductor 200 are a plurality of particles in the first reaction chamber before starting the step S102. The first dry-mixing process in step S102 may dispense the particles of the lithium ion conductor 200 among the particles of the cathode electrode active substance 100, thereby forming the mixture of two types of particles.

Compared to the later second dry-mixing process, the rotational speed of the first dry-mixing process is slower, and the rotation duration of the first dry-mixing process is longer. As a result, the cathode electrode active substance 100 and the lithium ion conductor 200 are mixed by the slow and gentle rotation. The first dry-mixing process may reduce the possibility for the submicron particles or nano-particles of the lithium ion conductor 200 to re-aggregate, which increase the dispensing uniformity of the cathode electrode active substance 100 and the lithium ion conductor 200.

In some embodiments, the rotational speed of the first dry-mixing process may be in a range of 10 revolutions per minute (rpm) to 100 rpm, such as 30 rpm 50 rpm, 70 rpm, or 90 rpm, and the rotation duration of the first dry-mixing process may be in a range of 0.5 hour to 12 hours, such as 1 hour, 2 hours, 4 hours, 8 hours, or 10 hours. The cathode electrode active substance 100 and the lithium ion conductor 200 are uniformly mixed under the above-mentioned rotational speed and rotation duration. If the rotational speed of the first dry-mixing process is faster than 100 rpm, the lithium ion conductor 200 having small grain size may tend to aggregate rather than being dispensed in the cathode electrode active substance 100. If the rotational speed of the first dry-mixing process is slower than 10 rpm or the rotation duration is shorter than 0.5 hour, the dispensing uniformity of the cathode electrode active substance 100 and the lithium ion conductor 200 may be so low that the yield of the cathode electrode composite material is significantly reduced.

During the first dry-mixing process, the first reaction chamber is rotated along a rotation axis. The angle between the chamber axis of the first reaction chamber and the rotation axis may be in a range of 0° to 60°, such as 15°, 30°, or 45°, so that the lithium ion conductor 200 is easily dispensed in the cathode electrode active substance 100. The first dry-mixing process may be performed under a protective atmosphere to reduce the contamination risk of the cathode electrode active substance 100 and the lithium ion conductor 200. For example, the protective atmosphere may be pure oxygen with an oxygen concentration higher than 95%, dry air, or a mixture of oxygen and dry air.

Since the first dry-mixing process reduces the risk of particle aggregation, the grain sizes of the cathode electrode active substance 100 and the lithium ion conductor 200 may be reduced to form the cathode electrode composite material having high charge and discharge cycle performance. For example, the cathode electrode active substance 100 may be a single crystal lithium transition metal oxide having a grain size (D₅₀) in a range of 1 µm to 10 µm, while the lithium ion conductor 200 may be a garnet oxide having a grain size (D₅₀) in a range of 1 nm to 200 nm.

In some embodiments, the cathode electrode active substance 100 may include a lithium transition metal oxide having a layered structure similar to lithium cobalt oxide or a lithium transition metal oxide having a spinel structure, leading to the cathode electrode composite material with high energy density and may be applied with high operation voltage. For example, the lithium transition metal oxide having the layered structure may include Li_{1±σ}NiₓCo_{y}Mn_{z}A_{w}O_{2±θ}, where A is one or more elements selected from Nb, Zr, Zn, W, B, Ti, Al, Cr, Ga, Cu, La and Y, 0≤σ≤0.1, 0≤θ≤0.05, and 0.95≤w+x+y+z≤1.05. The lithium transition metal oxide having the spinel structure may include Li_{1±α}NiₐMn_{b}B_{c}O_{4±β}, where B is one or more elements selected from Co, Nb, Zr, Zn, W, B, Ti, Al, Cr, Ga, Cu, La and Y, 0≤α≤0.1, 0≤β≤0.05, and 0.95≤a+b+c≤1.05.

In some embodiments, the lithium ion conductor 200 may be a garnet oxide Li_{7±k}La_{3±l}Zr_{2±m}XₙO₁₂ formed by, for example, a solid state sintering process, a hydrothermal process, or a sol-gel process, where X is one or more elements selected from Ga, Ta, Nb and Al, 0≤k≤0.3, 0≤l≤0.5, 0≤m≤0.5, and 0≤n≤0.5. The above-mentioned garnet oxide has high chemical stability, and the garnet oxide may exchange the lithium ions with the cathode electrode active substance 100. Therefore, when the lithium ions are pulled away from the cathode electrode active substance 100 under high operation voltage, the garnet oxide may reduce the risk of the cathode electrode active substance 100 having unstable structure. This improves the charge and discharge cycle performance of the cathode electrode composite material.

Referring back to Fig. 1, the method S100 continues to step S104, which a second dry-mixing process is performed to attach the lithium ion conductor to the cathode electrode active substance to form composite particles. Specifically, the mixture from the first dry-mixing process is added into a second reaction chamber and stirred fast by a rotary mixer. The cathode electrode active substance and the lithium ion conductor are directly mixed in a dry powder state in the second dry-mixing process, where an additional solvent or a liquid dispenser may not be added during the second dry-mixing process. The second reaction chamber includes a slit inside. When the mixture passes through the slit during the stirring process, the lithium ion conductor may be physically attached to cathode electrode active substance by the shear force from the friction between the mixture and the walls of slit.

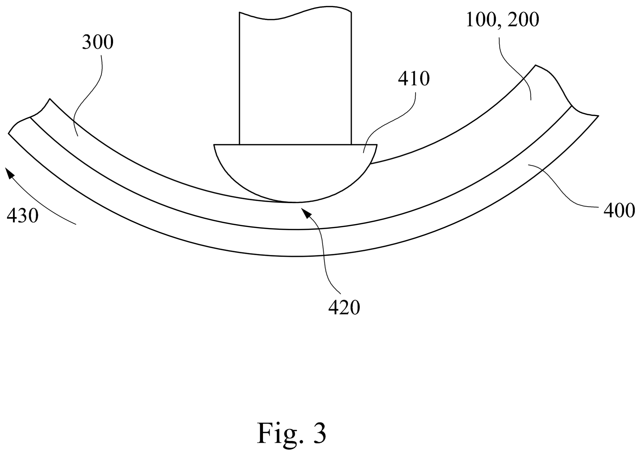

According to some embodiments of the present disclosure, Fig. 3 illustrates a partial cross-sectional view of the second reaction chamber. The second reaction chamber may include a rotary mixer 400 and a press head 410 applying a normal force toward the rotary mixer 400 inside the chamber. The rotary mixer 400 and the press head 410 are separated by a distance to form the slit 420 between the rotary mixer 400 and the press head 410. When the rotary mixer 400 rotates along the direction 430, the rotary mixer 400 drives the cathode electrode active substance 100 and the lithium ion conductor 200 in the mixture to pass through the slit 420. The rotary mixer 400 and the press head 410 on two sides of the slit 420 rub the mixture to apply the shear force on the lithium ion conductor 200, which results in the composite particles 300 having the lithium ion conductor 200 attached to the cathode electrode active substance 100.

Referring to the schematic view of reactions in Fig. 2, the shear force is applied during the second dry-mixing process in step S104, such that the particles of the lithium ion conductor 200 may be attached to the surfaces of the particles of the cathode electrode active substance 100 to form the composite particles 300. In other words, the lithium ion conductor 200 attached to the cathode electrode active substance 100 modifies the surface of the cathode electrode active substance 100.

Compared to the first dry-mixing process, the rotational speed of the second dry-mixing process is faster, and the rotation duration of the second dry-mixing process is shorter. As a result, the dispensing uniformity of the cathode electrode active substance 100 and the lithium ion conductor 200 is further increased by the fast and strong rotation. For example, the rotational speed of the second dry-mixing process may be 10 times to 40 times as fast as the rotational speed of the first dry-mixing process, so the rotational speed of the second dry-mixing process is high enough to drive the cathode electrode active substance 100 and the lithium ion conductor 200 to fast pass through the slit. Therefore, a large shear force may be applied to the lithium ion conductor 200 to physically attach the lithium ion conductor 200 to the cathode electrode active substance 100. If the rotational speed of the second dry-mixing process is faster than 40 times of the rotational speed of the first dry-mixing process, the charge and discharge cycle performance of the cathode electrode composite material may be affected due to the structure of the composite particles 300 being damaged by the second dry-mixing process.

In some embodiments, the rotational speed of the second dry-mixing process may be in a range of 1500 rpm to 2500 rpm, such as 1750 rpm, 2000 rpm, or 2250 rpm, and the rotation duration of the second dry-mixing process may be shorter than or equal to 30 minutes, such as 10 minutes, 15 minutes, or 20 minutes. The cathode electrode active substance 100 may be attached with sufficient lithium ion conductor 200 under the above-mentioned rotational speed and rotation duration. If the rotational speed of the second dry-mixing process is slower than 1500 rpm, the shear force of the second dry-mixing process may be too weak to physically attach the lithium ion conductor 200 to the cathode electrode active substance 100. If the rotational speed of the second dry-mixing process is faster than 2500 rpm or the rotation duration is longer than 30 minutes, the charge and discharge cycle performance of the cathode electrode composite material may be affected due to the structure of the composite particles 300 being damaged by the second dry-mixing process.

The slit inside the second reaction chamber may be in a range of 0.1 mm to 5 mm to apply enough shear force to the mixture by the walls on two sides of the slit. The second dry-mixing process may be performed under a protective atmosphere to reduce the contamination risk of the composite particle 300. For example, the protective atmosphere may be pure oxygen with an oxygen concentration higher than 95%, dry air, or a mixture of oxygen and dry air.

Referring back to Fig. 1, the method S100 continues to step S106, which a heat treatment process is performed on the composite particles to form the cathode electrode composite material. Specifically, the composite particles from the second dry-mixing process are placed under protective atmosphere and heated with appropriate temperature to form an interface by the cathode electrode active substance and the lithium ion conductor, while the interface has an interface phase. This interface phase is different from the crystalline phase of the cathode electrode active substance (for example, a layered crystalline phase or a spinel crystalline phase of the lithium transition metal oxide) and the crystalline phase of the lithium ion conductor (for example, a garnet crystalline phase). That is, the formation of the interface phase may be one of the changes from the composite particles to the cathode electrode composite material.

The interface phase formed by the cathode electrode active substance and the lithium ion conductor may enhance the adhesive strength at the heterogeneous interface between the lithium transition metal oxide and the garnet oxide, which reduces the risk of the lithium ion conductor falling off from the cathode electrode active substance. In addition, the interface phase may also reduce the diffusional impedance of the lithium ions in the cathode electrode composite material, thereby improving the charge and discharge cycle performance of the cathode electrode composite material.

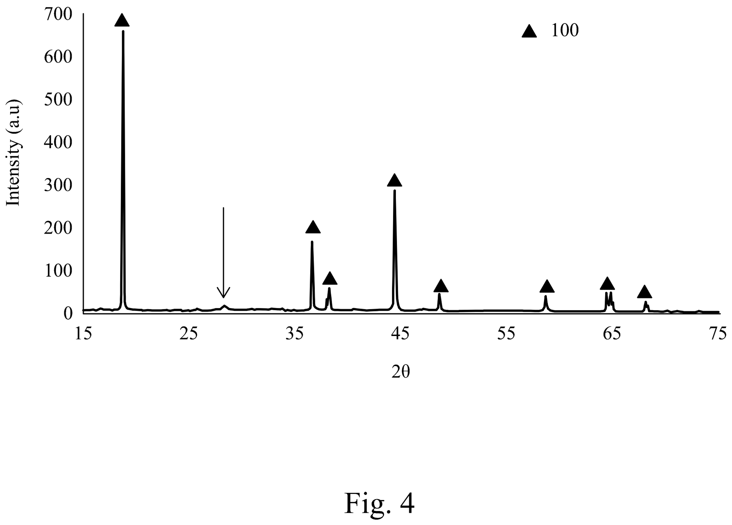

According to some embodiments of the present disclosure, Fig. 4 is an X-ray diffraction spectrum of a cathode electrode composite material, where a copper target is used for the X-ray diffraction spectrum. The X-ray diffraction signal in Fig. 4 mainly shows the crystalline phase of the cathode electrode active substance 100 having a layered structure, for example, the characteristic peaks with the diffraction angle (2θ) at 18.785°, 36.650°, 38.101°, 38.269°, 44.370°, 48.874°, 58.765°, 64.478°, 64.729°, 68.029°, 76.736° and 77.549°. The three strongest peak values appear at the diffraction angle (2θ) at 18.785°, 44.370°, and 36.650°.

The characteristic peak with the X-ray diffraction angle (2θ) in a range of 28° to 29° (labeled with an arrow in Fig. 4) corresponds to the X-ray diffraction signal of the interface phase formed by the cathode electrode active substance 100 and the lithium ion conductor, and this characteristic peak does not correspond to the crystalline phase of the cathode electrode active substance 100 or the garnet crystalline phase of the lithium ion conductor (for example, the characteristic peaks with the diffraction angle (2θ) at 16.743°, 19.356°, 25.699°, 27.508°, 30.831°, 32.376°, 32.285°, 33.858°, 37.999°, 42.986°, 44.163°, 47.548°, 48.635°, 50.759°, 51.797°, 52.821°, 55.811°, 56.783°, and 59.642°). As shown in Fig. 4, a ratio between the characteristic peak intensity of the interface phase with the diffraction angle (2θ) in a range of 28° to 29° and the second strongest characteristic peak intensity of the cathode electrode active substance 100 with the diffraction angle (2θ) in a range of 44° to 45° may be in a range of 0.01 to 0.08.

In some embodiments, the heating temperature of the heat treatment process may be in a range of 400°C to 900°C, and the heating duration may be in a range of 20 minutes to 2 hours. The heat treatment process may include a temperature rising stage that rises 1°C to 10°C per minute, a temperature holding stage with the above heating temperature and heating duration, and a temperature cooling stage by natural cooling. The heat treatment process may be performed under a protective atmosphere to reduce the contamination risk of the cathode electrode composite material. For example, the protective atmosphere may be pure oxygen with an oxygen concentration higher than 95%.

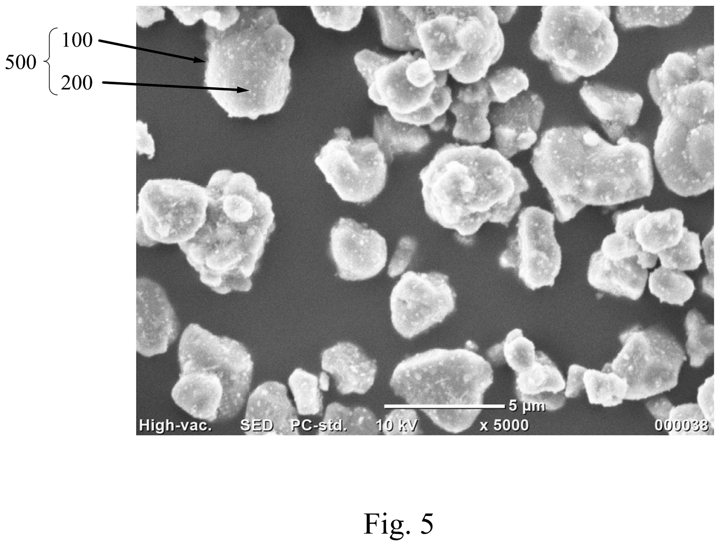

According to some embodiments of the present disclosure, Fig. 5 is a scanning electron microscope image of a cathode electrode composite material 500. The cathode electrode active substance 100 acts as the main body of the cathode electrode composite material 500, and the lithium ion conductor 200 is coated on the surface of the cathode electrode active substance 100. After the heat treatment process, the lithium ion conductor 200 forms a plurality of island grains on the surface of the cathode electrode active substance 100 to provide a rough surface of the cathode electrode composite material 500. As a result, the contact area between the cathode electrode composite material 500 and the external electrolyte may be increased to improve the conducting efficiency of the lithium ions between the cathode electrode composite material 500 and the electrolyte.

For example, the cathode electrode composite material 500 after the heat treatment process may have a grain size (D₅₀) in a range of 1 µm to 20 µm and a powder tap density in a range of 2.0 g/cm³ to 2.5 g/cm³. A weight percentage of the lithium ion conductor 200 in the cathode electrode composite material 500 may be in a range of 0.5 wt% to 10 wt%, so that the lithium ion conductor 200 forms the island grains on the surface of the cathode electrode active substance 100. The surface of the cathode electrode active substance 100 may be discontinuously coated with the lithium ion conductor 200 to form the separated island grains shown in Fig. 5. In some other embodiments, the lithium ion conductor 200 may be aggregated island grains that form a continuous coating on the surface of the cathode electrode active substance 100.

When the cathode electrode composite material is formed by the above-mentioned method, a solvent, such as water, or a liquid dispenser is not used during the dry-mixing process. This may reduce the risk of the degradation of cathode electrode active substance or lithium ion conductor, which increases the yield of the cathode electrode composite material. In addition, the method includes first attaching the lithium ion conductor to the cathode electrode active substance by the second dry-mixing process, and then performing the heat treatment process to form the interface phase between the lithium ion conductor and the cathode electrode active substance. The lithium ion conductor may be attached to the cathode electrode active substance by the heating temperature lower than the melting point of the lithium ion conductor, which lowers the difficulty of manufacturing the cathode electrode composite material.

In the following descriptions, a variety of measurements and evaluations were performed for the electrode plate formed of the cathode electrode composite material of the present disclosure.

In the experiment, the impact evaluation of the cathode electrode composite material on charge and discharge ability is performed for the lithium ion battery of comparative examples and example. Specifically, the cathode electrode composite materials of example and comparative examples are first prepared according to the cathode electrode composite material recipe in Table 1 below. The cathode electrode active substance is a single crystal lithium transition metal oxide Li_{1.0}Ni_{0.88}CoMnO₂, and the lithium ion conductor is a garnet oxide Li_{6.8}La_{3.0}Zr_{2.0}Ga_{0.33}O₁₂. The rotational speed of the first dry-mixing process is 36 rpm, and the first dry-mixing process is performed for 8 hours with a 45° angle between the chamber axis of the first reaction chamber and the rotation axis. The rotational speed of the second dry-mixing process is 2250 rpm, and the second dry-mixing process is performed for 15 minutes by the second reaction chamber including a 5 mm slit. The heat treatment process includes a temperature rising stage that rises 3°C per minute, a temperature holding stage at 600°C for 1 hour, and a temperature cooling stage by natural cooling. Other processing details referred to the above-mentioned manufacturing method of the cathode electrode composite material.

**Table 1**

| | Cathode electrode active substance | Lithium ion conductor | First dry-mixing process | Second dry-mixing process | Heat treatment process |
|---|---|---|---|---|---|
| Example | 750 g | 37.5 g | performed | performed | performed |
| Comparative example 1 | 750 g | 37.5 g | performed | not performed | performed |
| Comparative example 2 | 750 g | 0 g | not performed | not performed | not performed |

After manufacturing the cathode electrode composite materials in Table 1, the electrode material of example and comparative examples are formed by mixing 96 wt% of the cathode electrode composite material, 1.0 wt% of carbon nanotubes, 0.5 wt% of amorphous carbon, and 2.5 wt% of polyvinylidene difluoride (PVDF) as an adhesive. The electrode material is coated, dried, and rolled on a metal current collection plate to form a coating layer with a density of about 3.2 g/cm³. After the manufacturing process, the cathode electrode plate including the metal current collection plate and the coating layer is prepared.

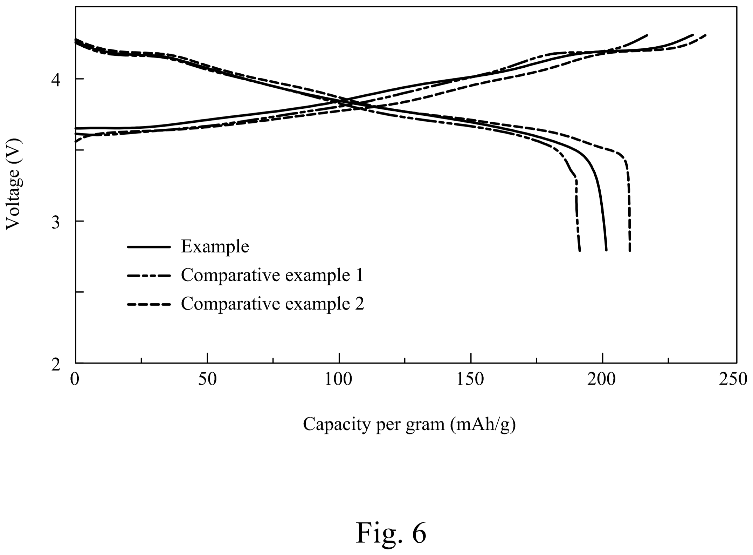

Then, a 2032 coin cell battery is selected as the carrier of the lithium ion battery. The cathode electrode plates of example and comparative examples are selected as the battery cathode electrode, a lithium metal is selected as the battery anode electrodes, and the cathode electrode and the anode electrode of each battery are separated by an isolate film infiltrated by an electrolyte. A charge and discharge cycle under 0.1C constant current charge/0.1C constant current discharge (0.1CC/0.1CD) is performed three times on the lithium ion batteries to activate the lithium ion batteries. The graph of the first charge and discharge cycle is shown in Fig. 6.

As seen from Fig. 6, the curves of the charge and discharge cycle of example and comparative examples are similar. This indicates that the lithium ion batteries of example and comparative examples have similar charge and discharge mechanism. Taking the charge curves in Fig. 6 as an example, a charging plateau at 4.1V representing a high nickel cathode electrode may be observed in all of example and comparative examples. In other words, attaching the lithium ion conductor to the cathode electrode active substance does not significantly change the charge and discharge mechanism of the lithium ion battery.

Additionally, Fig. 6 illustrates the slight difference of the capacity per gram of the lithium ion batteries between example and comparative examples. Compared to the electrode plate composition of comparative example 2, the cathode electrode composite materials of example and comparative example 1 include the lithium ion conductor without capacity. As a result, the capacity per gram of example and comparative example 1 are slightly lower than that of comparative example 2.

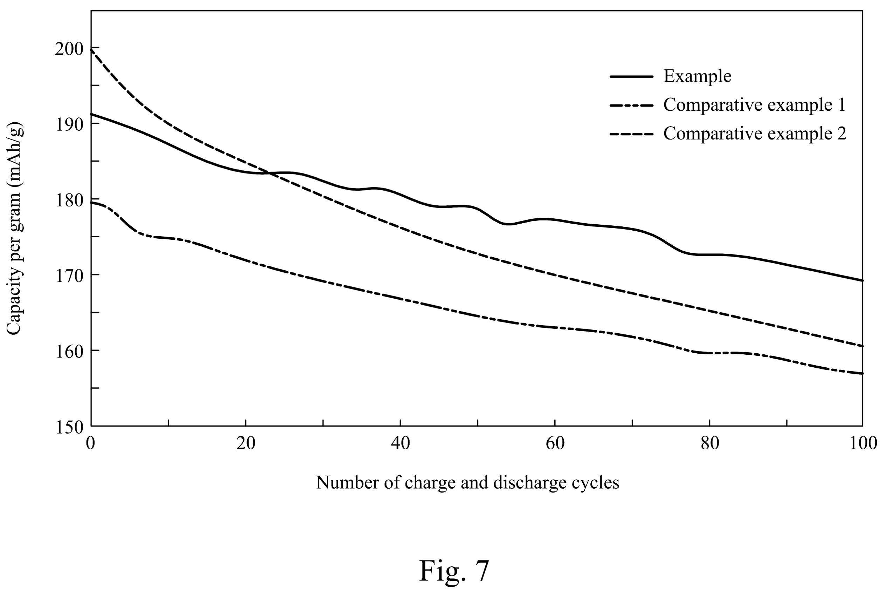

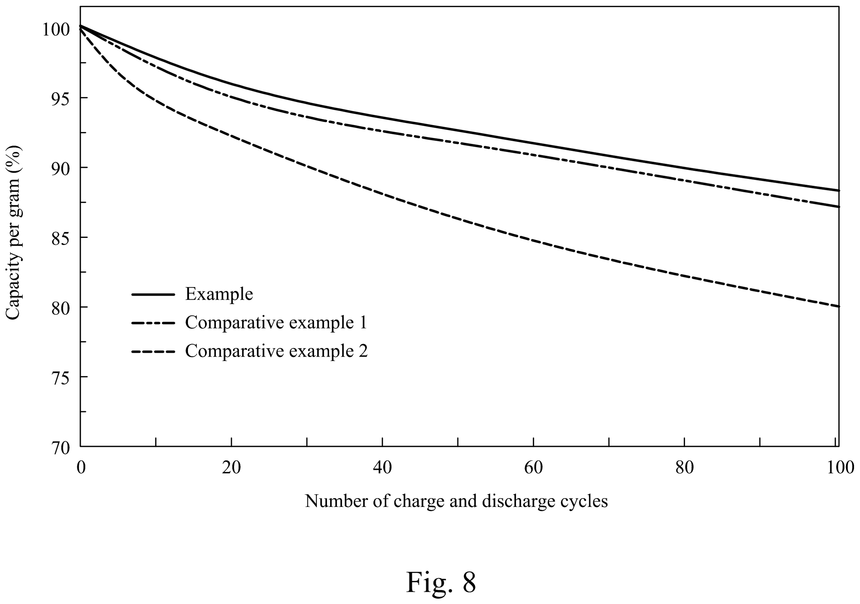

After the activation of the lithium ion batteries of example and comparative examples, a charge and discharge cycle test is performed on the lithium ion batteries. Specifically, a charge and discharge cycle under 0.2CC/0.5CD is performed 100 times on the lithium ion battery, and the capacity per gram of the lithium ion battery in each cycle is measured. The graph of the capacity per gram of the lithium ion battery against the number of the performed charge and discharge cycles is shown in Fig. 7. In addition, the percentage of capacity per gram retained by the lithium ion battery during the charge and discharge cycles is calculated, where the respective capacity per gram of example and comparative examples in the first charge and discharge cycle is taken as the standard of comparison (i.e., 100%). The calculating results are shown in graph of Fig. 8.

As seen from Fig. 7 and Fig. 8, example and comparative example 1 have higher high-rate performance than comparative example 2, and the degradation of the capacity per gram of example and comparative example 1 is slower than comparative example 2. This indicates that the lithium ion battery of example and comparative example 1 retain more capacity per gram in repeated charge and discharge cycle operation. In other words, attaching the lithium ion conductor to the cathode electrode active substance may improve the charge and discharge cycle performance of the lithium ion battery. Additionally, the capacity per gram of example is significantly higher than the capacity per gram of comparative example 1 in the charge and discharge cycle test. This indicates that the high speed rotation of the second dry-mixing process for the cathode electrode composite material of example facilitates the attachment of the lithium ion conductor to the cathode electrode active substance and effectively increases the capacity per gram of the cathode electrode active substance.

In addition to the charge and discharge cycle test, a high-rate charge and discharge test is also performed on the activated lithium ion battery. Specifically, the capacity per gram of the lithium ion battery is measured under various current conditions. The percentage of capacity per gram retained by the lithium ion battery under high-rate charge and discharge operation is calculated, where the respective capacity per gram of example and comparative examples under 0.2CC/0.2CD is taken as the standard of comparison (i.e., 100%). The calculating results are shown in Table 2.

**Table 2**

| | 0.2CC/0.2CD | 0.2CC/0.5CD | 0.2CC/1.0CD | 0.2CC/3.0CD |
|---|---|---|---|---|
| Example | 100.0% | 95.4% | 91.6% | 84.0% |
| Comparative example 1 | 100.0% | 94.8% | 90.7% | 82.5% |
| Comparative example 2 | 100.0% | 92.7% | 88.7% | 74.8% |

As seen from Table 2, example and comparative example 1 have higher percentages of capacity per gram than comparative example 2 as the discharge current increases. This indicates that the capacity per gram retained by the lithium ion batteries of example and comparative example 1 under high-rate charge and discharge operation is closer to the capacity per gram under small discharge current. In other words, attaching the lithium ion conductor to the cathode electrode active substance may improve the high-rate charge and discharge performance of the lithium ion battery. Additionally, the retained percentage of capacity per gram of example is higher than that of comparative example 1, and the difference between the retained percentages of capacity per gram of example and comparative example 1 becomes larger as the discharge current increases. This indicates that the high speed rotation of the second dry-mixing process for the cathode electrode composite material facilitates the attachment of the lithium ion conductor to the cathode electrode active substance, and the resulted cathode electrode composite material with high lithium ionic conductivity effectively improves the high-rate charge and discharge performance of the lithium ion battery.

According to the above-mentioned, the manufacturing method of the cathode electrode composite material of the present disclosure includes the first dry-mixing process mixing the cathode electrode active substance and the lithium ion conductor, the second dry-mixing process forming the composite particles, and the heat treatment process forming the cathode electrode composite material. The cathode electrode active substance and the lithium ion conductor are dispensed with high uniformity by the low rotational speed of the first dry-mixing process, which reduces the risk of aggregation of the lithium ion conductor and facilitates the attachment of the lithium ion conductor to the cathode electrode active substance. The lithium ion conductor is physically attached to the cathode electrode active substance by the high rotational speed of the second dry-mixing process, which increases the lithium ionic conductivity of the cathode electrode composite material. An interface phase is formed by the cathode electrode active substance and the lithium ion conductor during the heat treatment process, where the interface phase may reduce the risk of the lithium ion conductor falling off from the cathode electrode active substance and reduce the diffusional impedance of lithium ions in the cathode electrode composite material. Therefore, the resulted lithium ion battery has high power density, retains high capacity per gram during charge and discharge cycles, and is suitable for charge and discharge operation at high-rate.

## Claims

1. A manufacturing method of a cathode electrode composite material of a lithium ion battery, **characterized by** comprising:
performing a first dry-mixing process (S102) under a protective atmosphere to mix a cathode electrode active substance (100) with a lithium ion conductor (200) under the protective atmosphere;
performing a second dry-mixing process (S104) under the protective atmosphere to attach the lithium ion conductor (200) to the cathode electrode active substance (100); and
performing a heat treatment process under the protective atmosphere to form an interface phase by the cathode electrode active substance (100) and the lithium ion conductor (200), wherein the interface phase is different from a crystalline phase of the cathode electrode active substance (100) and a crystalline phase of the lithium ion conductor (200).

2. The manufacturing method according to claim 1, **characterized in that** a first rotational speed and a first rotation duration of the first dry-mixing process (S102) are different from a second rotational speed and a second rotation duration of the second dry-mixing process (S104), respectively.

3. The manufacturing method according to any one of claims 1-2, **characterized in that** the second dry-mixing process (S104) comprises applying a shear force to the lithium ion conductor (200) to attach the lithium ion conductor (200) to the cathode electrode active substance (100).

4. The manufacturing method according to any one of claims 1-3, **characterized in that** during the first dry-mixing process (S102), a grain size of the cathode electrode active substance (100) is in a range of 1 µm to 10 µm, and a grain size of the lithium ion conductor (200) is in a range of 1 nm to 200 nm.

5. The manufacturing method according to any one of claims 1-4, **characterized in that** performing the first and the second dry-mixing process without a solvent or a liquid dispenser.

6. The manufacturing method according to any one of claims 1-5, **characterized in that** the cathode electrode active substance (100) comprises a lithium transition metal oxide Li_{1±σ}NiₓCo_{y}Mn_{z}A_{w}O_{2±θ}, A is one or more elements selected from the group consisting of Nb, Zr, Zn, W, B, Ti, Al, Cr, Ga, Cu, La and Y, 0≤σ≤0.1, 0≤θ≤0.05, and 0.95≤w+x+y+z≤1.05,
or the cathode electrode active substance (100) comprises a lithium transition metal oxide Li_{1±α}NiₐMn_{b}B_{c}O_{4±β}, B is one or more elements selected from the group consisting of Co, Nb, Zr, Zn, W, B, Ti, Al, Cr, Ga, Cu, La and Y, 0≤α≤0.1, 0≤β≤0.05, and 0.95≤a+b+c≤1.05.

7. The manufacturing method according to any one of claims 1-6, **characterized in that** the lithium ion conductor (200) comprises a garnet oxide Li_{7±k}La_{3±l}Zr_{2±m}XₙO₁₂, X is one or more elements selected from the group consisting of Ga, Ta, Nb and Al, 0≤k≤0.3, 0≤l≤0.5, 0≤m≤0.5, and 0≤n≤0.5.

8. The manufacturing method according to any one of claims 1-7, **characterized in that** the heat treatment process comprises a temperature rising stage that rises 1°C to 10°C per minute, a temperature holding stage with a heating temperature in a range of 400°C to 900°C, and a temperature cooling stage by natural cooling.

9. The manufacturing method according to any one of claims 1-8, **characterized in that** the protective atmosphere of the heat treatment process is pure oxygen with an oxygen concentration higher than 95%, and the protective atmosphere of the first dry-mixing process or the second dry-mixing process is pure oxygen with an oxygen concentration higher than 95%, dry air, or a mixture of oxygen and dry air.

10. The manufacturing method according to any one of claims 1-9, **characterized in that**:
a second rotational speed of the second dry-mixing process (S104) is faster than a first rotational speed of the first dry-mixing process (S102), and the second rotational speed of the second dry-mixing process is 10 times to 40 times as fast as the first rotational speed of the first dry-mixing process.

11. The manufacturing method according to any one of claims 1-10, **characterized in that** performing the first dry-mixing process (S102) comprises:
adding the cathode electrode active substance (100) and the lithium ion conductor (200) into a first reaction chamber; and
rotating the first reaction chamber along a rotation axis, wherein an angle between a chamber axis of the first reaction chamber and the rotation axis is in a range of 0° to 60°.

12. The manufacturing method according to any one of claims 1-11, **characterized in that** performing the second dry-mixing process (S104) comprises:
adding the cathode electrode active substance (100) and the lithium ion conductor (200) into a second reaction chamber which comprises a slit (420); and
stirring the cathode electrode active substance (100) and the lithium ion conductor (200) in the second reaction chamber by a rotary mixer (400), wherein the cathode electrode active substance (100) and the lithium ion conductor (200) pass through the slit (420) to form composite particles (300).

13. The manufacturing method according to any one of claim 12, **characterized in that** the second reaction chamber further comprises a press head (410) separated from the rotary mixer (400), and the slit (420) is formed by the rotary mixer (400) and the press head (410).

14. The manufacturing method according to any one of claims 12-13, **characterized in that** the slit (420) is in a range of 0.1 mm to 5 mm.

15. The manufacturing method according to any one of claims 1-14, **characterized in that** a first rotation duration of the first dry-mixing process (S102) is longer than a second rotation duration of the second dry-mixing process (S104).
